# FASCICULE DE BREVET EUROPEEN

(11) **EP 2 454 115 B1**
(45) Date de publication et mention de la délivrance du brevet: **17.06.2015**
(21) Numéro de dépôt: 10742196.8
(22) Date de dépôt: 05.07.2010
(51) Int. Cl.: B60K 23/08

(54) **DISPOSITIF DE SELECTION D'UN MODE DE MOTRICITE D'UN VEHICULE A QUATRE ROUES MOTRICES**
VORRICHTUNG ZUM AUSWÄHLEN EINES FAHRMODUS EINES FAHRZEUGES MIT ALLRADANTRIEB
DEVICE FOR SELECTING A DRIVE MODE OF A FOUR WHEEL DRIVE VEHICLE

(30) Priorité: 17.07.2009 FR 0954967
(43) Date de publication de la demande: 23.05.2012
(73) Titulaire: Renault S.A.S., 78288 Guyancourt Cedex (FR)
(72) Inventeur: MONTI, Alessandro, F-92250 La Garenne Colombes (FR); POTHIN, Richard, F-78760 Jouars Pontchartrain (FR); SAINT LOUP, Philippe, F-78760 Jouars Pontchartrain (FR)
(86) Numéro de dépôt international: PCT/FR2010/051411
(87) Numéro de publication internationale: WO 2011/007076

(56) Documents cités:
- EP-B1- 0 390 197
- EP-B1- 1 413 468
- JP-A- 1 028 028
- US-A1- 2004 176 898
- US-B1- 6 568 256

## Description

L'invention concerne un dispositif de commande pour la sélection de modes de motricité d'un véhicule automobile. Elle concerne plus particulièrement un dispositif permettant d'adapter au fonctionnement d'un véhicule à quatre roues motrices le mode de motricité du véhicule demandé par le conducteur. US 6568256 B1 décrit un dispositif selon le préambule de la revendication 1.

Elle concerne ainsi le domaine des véhicules ayant des transmissions intégrales pour lesquelles toutes les roues d'un véhicule sont motrices et pour lesquelles au moins deux modes de motricité sont envisageables.

Par exemple, le véhicule peut présenter trois modes de motricité, à savoir :
- un mode de motricité appelé « 4x4 Tout-Terrain » (Quatre Roues Motrices) dans lequel le couple maximum est transmis à l'arrière sans écart de vitesse entre les deux essieux avant et arrière du véhicule,
- un mode de motricité « 4x4 automatique » dans lequel une différence de vitesse est régulée entre les deux essieux avant et arrière du véhicule ; et
- un mode de motricité « 4x2 » (Deux Roues Motrices) dans lequel le véhicule utilise deux roues motrices.

Les modes de motricité d'un véhicule à quatre roues motrices sont adaptés à des conditions de fonctionnement précises du véhicule. Par exemple, le mode 4x4 Tout-Terrain est utilisé pour des terrains difficiles sur lequel le véhicule roule à vitesse faible ou moyenne. En effet, le mode 4x4 Tout-Terrain permet de transmettre le couple maximum entre les deux essieux avant et arrière du véhicule. Ce mode est adapté à ces conditions de terrains mais tend à provoquer une surchauffe du coupleur et son dysfonctionnement, voire sa rupture, si l'un des essieux patine suffisamment longtemps et que l'embrayage tout-terrain transmet du couple.

A l'inverse, les modes 4x4 Automatique et Deux Roues Motrices 4x2 sont utilisés pour des terrains relativement plats ou peu accidentés sur lesquels le véhicule peut rouler à une vitesse plus élevée, comme par exemple lors d'une utilisation sur route ou en utilisation dite tout chemin.

Il est donc important d'éviter le mode 4x4 Tout-Terrain lorsque le véhicule roule à une vitesse élevée ou avec un glissement entre l'essieu avant et arrière important, et ce même s'il correspond à la demande du conducteur.

Le but de la présente invention vise ainsi à permettre d'adapter au fonctionnement du véhicule le mode de motricité d'un véhicule à quatre roues motrices tel que sélectionné par le conducteur.

L'invention a donc pour objet, selon un premier aspect, un dispositif de sélection d'un mode de motricité pour véhicule automobile à au moins quatre roues motrices comprenant un moyen de sélection d'un mode de motricité du véhicule actionnable par le conducteur et des moyens de détermination d'au moins une variable caractéristique du fonctionnement du véhicule, selon la revendication 1.

Le dispositif peut en outre comprendre des moyens de codage des variables filtrées qui comportent des moyens de comparaison desdites variables avec au moins une valeur de seuil et des moyens pour affecter une valeur prédéterminée auxdites variables filtrées en fonction du résultat de ladite comparaison.

Selon encore une autre caractéristique du dispositif de sélection, les moyens de codage du mode de motricité sélectionné par le conducteur comportent des moyens pour affecter une valeur de codage prédéterminée pour chaque mode de motricité susceptible d'être sélectionné.

L'invention a également pour objet, selon un autre aspect, un procédé de sélection d'un mode de motricité pour véhicule automobile à au moins quatre roues motrices, selon la revendication 4.

Au cours du codage, on peut procéder à une comparaison des variables filtrées avec une valeur de seuil et l'on affecte une valeur de codage à chaque variable filtrée en fonction du résultat de ladite comparaison.

D'autres caractéristiques et avantages de l'invention apparaîtront à la lecture de la description détaillée d'un mode de réalisation pris à titre d'exemple non limitatif et illustré par les dessins annexés, sur lesquels :
- la figure 1 représente schématiquement l'architecture générale d'un dispositif de sélection de mode de motricité conforme à l'invention ;
- la figure 2 illustre schématiquement le fonctionnement du dispositif de la figure 1 ;
- la figure 3 représente schématiquement le bloc servant à adapter la volonté du conducteur du dispositif de la figure 2 ;
- la figure 4 représente schématiquement le bloc de codification de la vitesse du véhicule ;
- la figure 5 représente schématiquement le bloc de codification du mode de motricité sélectionné ;
- la figure 6 représente schématiquement le bloc de codification de la température ;
- la figure 7 représente schématiquement la procédure permettant d'adapter le mode de motricité demandé par le conducteur au fonctionnement du véhicule ; et
- la figure 8 est un diagramme décrivant la logique permettant d'interpréter la volonté du conducteur.

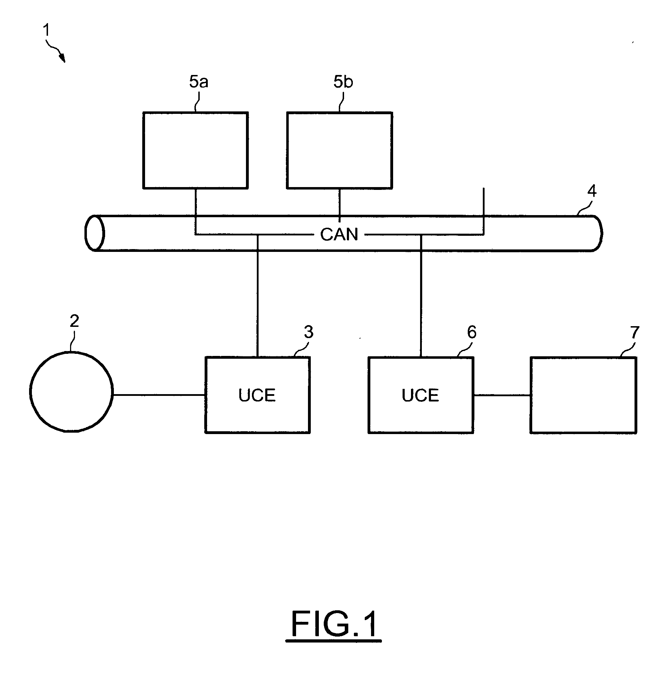

Sur la figure 1, on a représenté l'architecture générale d'un dispositif de sélection de mode de motricité conforme à l'invention, désigné par la référence numérique générale 1.

Ce dispositif est destiné à équiper un véhicule automobile de type à quatre roues motrices et comprenant plusieurs modes des motricité, tels que les modes « 4x4 Tout-Terrain », « 4x4 Automatique » et « 4x2 », détaillés ci-dessus.

Il est en particulier destiné à permettre à un conducteur de sélectionner un mode de motricité. Mais il est en outre destiné à commander la motricité du véhicule en tenant compte, d'un part, du mode de motricité sélectionné par le conducteur et, d'autre part, des conditions de roulage du véhicule.

Il s'agit, par exemple, d'exclure des modes de traction incompatibles avec les conditions de roulage du véhicule.

Ainsi, par exemple, comme cela sera détaillé par la suite, dans le cas où le véhicule circule à haute vitesse, et si le conducteur a sélectionné le mode « 4x4 Tout-Terrain », ce qui pourrait provoquer un échauffement voire une destruction de l'embrayage en raison d'une incompatibilité de fonctionnement à haute vitesse, le dispositif 1 peut être amené à modifier la sélection faite par le conducteur, en un mode moins agressif pour l'embrayage et surtout moins consommateur.

Pour ce faire, comme représenté, le dispositif 1 comprend un sélecteur 2 d'un mode de motricité, par exemple de type bouton, manoeuvrable par le conducteur, une première unité de contrôle électronique UCE 3, un réseau de communication 4, par exemple un bus d'information de type CAN, des capteurs de vitesse 5a, des moyens 5b de détermination de la température d'un coupleur de la transmission du véhicule, une deuxième unité de contrôle électronique UCE 6 et des moyens d'interfaçage 7 constituant une interface Homme-Machine.

Ces différents éléments communiquent entre eux.

En particulier, comme on le voit, le sélecteur 2 est relié à l'unité de contrôle électronique 3. L'interface Homme-Machine 7 est, de même, reliée à la deuxième unité de contrôle électronique 6.

Les deux unités de commande électronique 3 et 6, ainsi que le capteur de vitesse 5a et les moyens de détermination 5b de la température du coupleur, sont reliés à un bus du réseau de communication 4.

Le dispositif 1 de la figure 1 permet, par acquisition et le traitement de signaux d'entrée comme la vitesse du véhicule, la température du coupleur et la position du sélecteur 2 qui indique le mode de motricité demandé par le conducteur, de commander un mode de motricité correspondant aux conditions de fonctionnement du véhicule en tenant compte de la volonté du conducteur.

Dans l'exemple de réalisation envisagé, le sélecteur 2 utilisé est un sélecteur à au moins deux positions, et peut, à titre illustratif, correspondre à un sélecteur 2 bi-impulsionnel monostable, bi-stable mono-impulsionnel, ou tristable.

Mais on ne sort pas du cadre de l'invention lorsque l'on utilise, pour la sélection du mode de motricité, un moyen de reconnaissance vocale ou tout moyen permettant de sélectionner un mode de motricité.

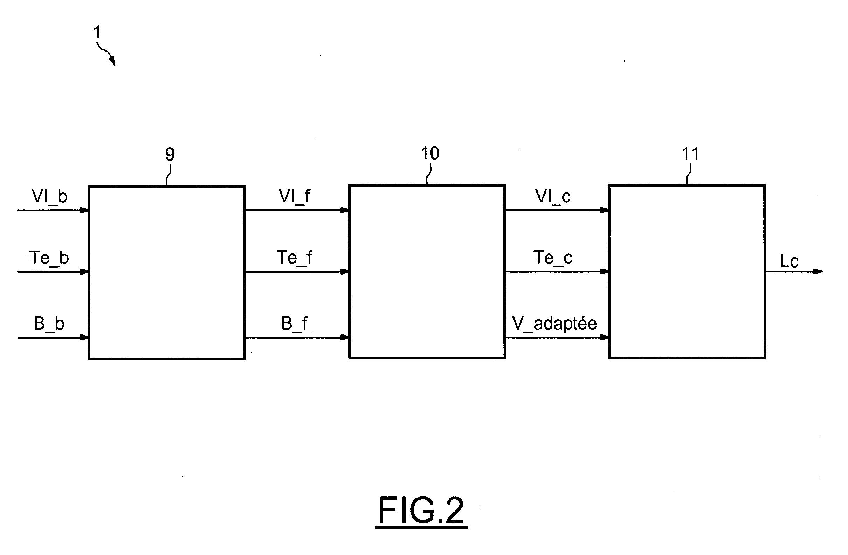

Sur la figure 2, on a représenté le fonctionnement du dispositif de la figure 1 et, en particulier, le traitement des différents signaux d'entrée mis en oeuvre au sein des unités de contrôle électronique. Comme on le voit, l'acquisition, le traitement des signaux et leur restitution sur l'interface Homme-Machine met en oeuvre trois blocs 9, 10 et 11 répartis au sein des unités de contrôle électronique 3 et 6.

Le premier bloc 9 reçoit, en entrée, les signaux délivrés par les capteurs de vitesse 5a, les moyens 5b ainsi qu'un signal représentant la position du sélecteur 2.

Il reçoit ainsi, en entrée, une valeur de vitesse de véhicule VI_b, la température du coupleur Te_b et une sélection de modes de motricité B_b.

On notera que la vitesse du véhicule est par exemple obtenue en utilisant des capteurs, et en calculant la moyenne des vitesses des roues avant. Celle-ci peut être codifiée afin d'obtenir une conversion en plage de vitesse en fonction de seuils fonctionnels des modes de motricité du véhicule.

En ce qui concerne la température du coupleur, celle-ci peut par exemple être mesurée et filtrée dans la plage de fonctionnement du capteur. Elle peut toutefois, en variante, être estimée. Dans ce dernier cas, la température du coupleur peut être estimée à partir de la différence de glissement des trains avant et arrière et du couple moteur appliqué. L'augmentation de la température de l'embrayage peut alors être estimée à partir de l'absorption de l'énergie due au frottement des disques du coupleur. La différence de vitesse en entrée et en sortie du coupleur et le couple appliqué constituent un gain en énergie calorifique. Le refroidissement peut, quant à lui, être estimé à partir de la capacité à évacuer ou à libérer l'énergie calorifique des différents éléments entrant dans la constitution du coupleur.

Enfin, la sélection du mode de motricité peut être délivrée au moyen de filtrage 9 sous la forme d'impulsions ou d'un signal fixe.

Le bloc 9 de filtrage permet de filtrer et de traiter numériquement les signaux bruts VI_b, Te_b et B_b, et de délivrer des signaux de sortie filtrés correspondants, à savoir : la vitesse filtrée du véhicule VI_f, la température filtrée du coupleur Te_f et le signal de sélection filtré B_f.

En particulier, le signal de sélection B_b est filtré de telle sorte que le dispositif 1 considère qu'il provient bien de l'action du conducteur sur le détecteur 2. Le dispositif 1 estime que c'est le cas lorsque cet appui présente une durée ni trop courte ni trop longue. En l'occurrence, un appui trop court est considéré par le dispositif 1 comme étant par exemple le résultat d'un mauvais contact. Un appui trop long est considéré comme étant le résultat d'un coincement du sélecteur.

Les signaux représentatifs des conditions de roulement du véhicule peuvent, de la même manière, être filtrés afin de garantir la qualité des données acquises, par exemple pour les faire correspondre à la plage de fonctionnement des capteurs.

Le deuxième bloc 10 est destiné à déterminer et délivrer un mode de motricité à partir de la vitesse filtrée du véhicule VI_f, de la température filtrée du coupleur Te-f et du signal de sélection filtré B_f. Ce mode de motricité correspond, en d'autres termes, à une variable V adaptée représentant une adaptation de la volonté du conducteur, telle que sélectionnée au moyen du sélecteur 2, pour tenir compte des conditions de roulage.

Il fournit également des valeurs de vitesse codées du véhicule VI_c et de températures du coupleur Te_c.

Le deuxième bloc 10 permet au dispositif 1 de déterminer un mode de motricité du véhicule en fonction des conditions de fonctionnement du véhicule et si possible adapté à la volonté V du conducteur.

Ce deuxième bloc 10 permet ainsi d'adapter la volonté du conducteur résultant de l'actionnement du sélecteur 2, et, le cas échéant, de modifier le mode sélectionné à partir des valeurs filtrées de la vitesse du véhicule et de la température et du coupleur.

Le troisième bloc 11 reçoit, en entrée, les signaux codés issus du deuxième bloc 10, à savoir la vitesse du véhicule VI_c, la température du coupleur TE_c et le nouveau mode de motricité V_adapté. Il délivre, en sortie, un signal d'information Lc à un moyen de signalisation pour informer le conducteur du mode de motricité sélectionné par le dispositif 1.

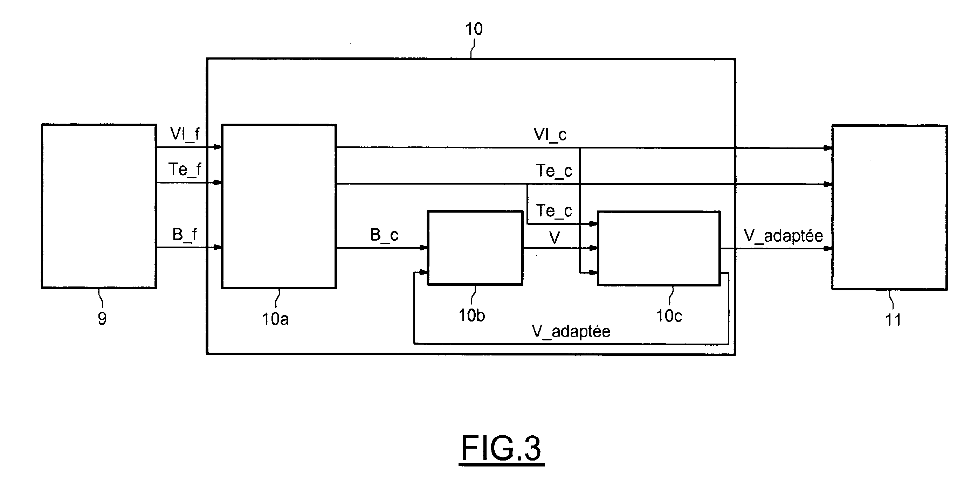

La figure 3 illustre l'architecture du deuxième bloc 10 d'interprétation de la volonté conducteur. Comme on le voit, ce bloc comprend trois étages 10a, 10b et 10c.

Le premier étage 10a est un moyen de codage des signaux d'entrée filtrés de la vitesse du véhicule VI_f, de la température du coupleur Te_f et du signal de sélection B_f. Il est en particulier destiné à l'élaboration de signaux codés sous la forme de plages de valeurs, permettant leur interprétation au moyen des matrices ou cartographies facilitant de la sorte les traitements ultérieurs. Il délivre en sortie des signaux de sortie codés VI_c, Te_c, B_c. Les signaux de sortie codés VI_c et Te_c sont envoyés au troisième étage 10c et au troisième bloc 11.

Le deuxième étage 10b reçoit, en entrée, le signal de sélection B_c et détermine la volonté V du conducteur, en terme de mode de motricité. Il s'agit, en d'autres termes, de mettre en oeuvre un filtrage permettant de déterminer la position du sélecteur 2, en particulier lors du fonctionnement du sélecteur par impulsions successives.

Le troisième étage 10c reçoit, en entrée, les signaux VI_c, Te_c, et la volonté V du conducteur, et délivre en sortie, le nouveau mode de motricité du véhicule *V_adaptée* tel que modifié par le dispositif 1. Il correspond à un moyen d'analyse de la volonté V du conducteur en fonction de la valeur des variables VI_c et Te_c traduisant les conditions de fonctionnement du véhicule.

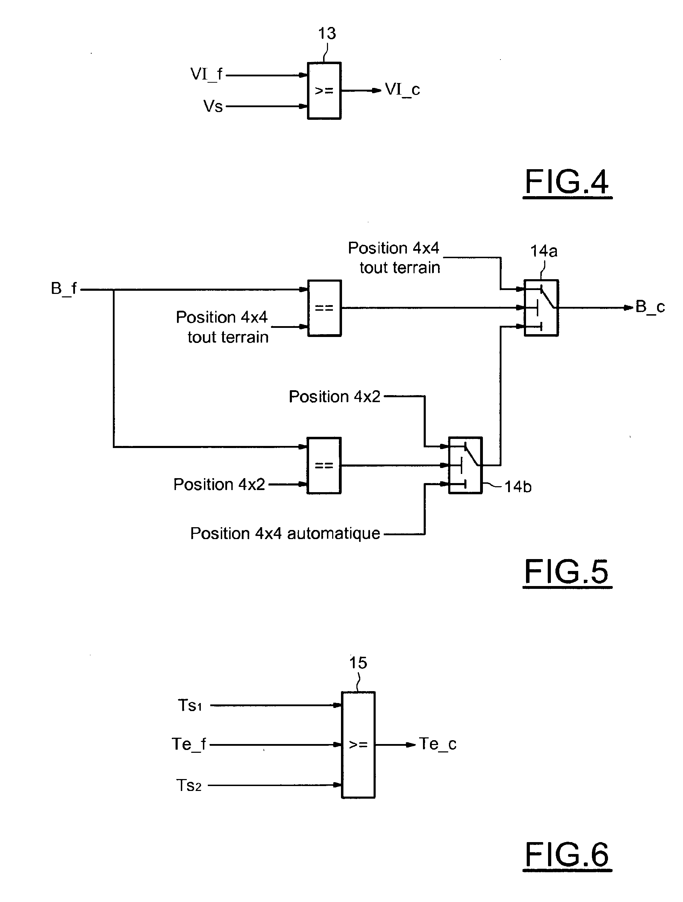

On va maintenant décrire, en référence à la figure 4, la procédure de codification de la vitesse.

Une valeur variable de la vitesse variable VI exprimée en km/heure est comparée à une valeur de vitesse seuil Vs. Cette valeur de vitesse seuil Vs est choisie pour correspondre à des conditions de fonctionnement du moteur du véhicule au-delà desquelles le coupleur s'échauffe anormalement. Par exemple, si la vitesse VI est inférieure ou égale (respectivement supérieure ou égale) à la valeur de vitesse seuil Vs, un comparateur 13 délivre pour la vitesse VI un signal égal à zéro (respectivement différent de 0, par exemple 1).

La figure 5 est un schéma illustrant le bloc de codification du mode de motricité du véhicule.

Ce bloc reçoit en entrée, le signal filtré du sélecteur B_f et délivre en sortie, le signal codifié du sélecteur B_c. Si la position du sélecteur B_f correspond au mode de motricité 4x4 Tout-Terrain , un premier moyen de sélection 14a affecte la valeur de sortie du mode de motricité 4x4 Tout-Terrain au signal codifié du sélecteur B_c, par exemple un signal égal à 0.

Si tel n'est pas le cas, et si la position du sélecteur B_f correspond au mode de motricité 4x2, un deuxième moyen de sélection 14b affecte la valeur de sortie du mode de motricité 4x2 au signal codifié du sélecteur B_c, par exemple un signal égal à 2.

Si la position du sélecteur B_f ne correspond ni au mode de motricité 4x4 Tout-Terrain ni au mode de motricité 4x2, la position du sélecteur B_f correspond au mode de motricité 4x4 Automatique et le deuxième moyen de sélection 14b affecte la valeur de sortie du mode de motricité 4x4 Automatique au signal codifié du sélecteur B_c, par exemple un signal égal à 1.

La figure 6 est un schéma illustrant la codification de la température.

Une valeur variable de température exprimée en degrés Celsius est comparée à deux valeurs de température seuil Ts1 et Ts2. Si elle est inférieure à Ts, alors un comparateur 15 délivre en sortie un signal égal à zéro. Si elle est comprise entre Ts1 et Ts2, alors le comparateur délivre en sortie un signal de température égal à 1. Si elle est supérieure à Ts2, alors le comparateur délivre en sortie un signal égal à 2. La valeur de température de seuil bas Ts1 correspond à un niveau de chauffage moyen acceptable pour le coupleur et la valeur de température de seuil haut Ts2 à un niveau de chauffage excessif.

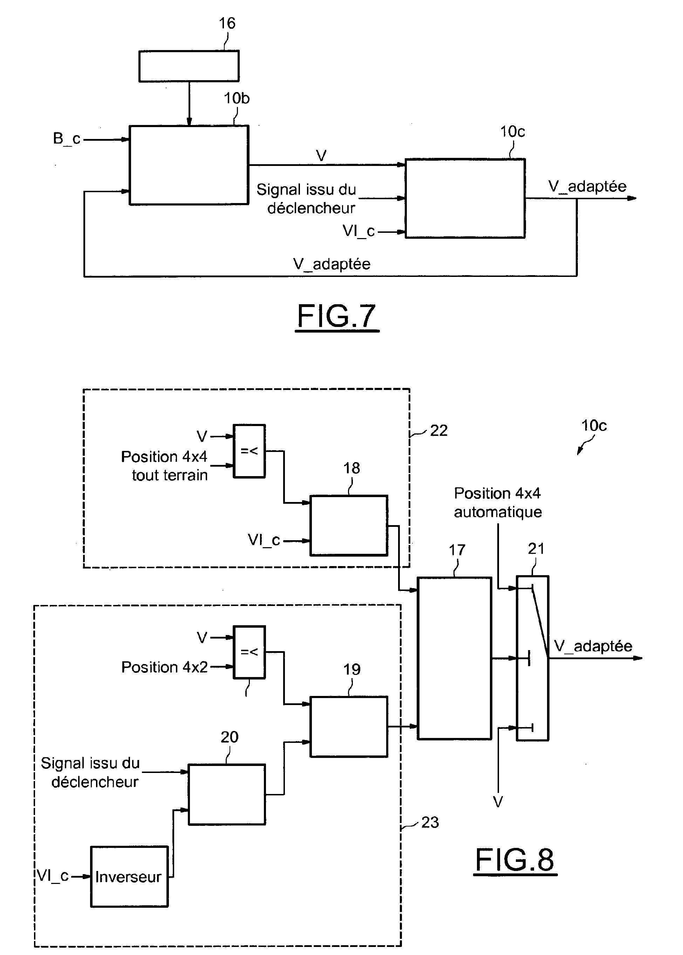

La figure 7 représente les étages 10b et 10c qui permettent de modifier ou adapter la volonté du conducteur V en terme de choix de motricité.

Le deuxième étage 10b est activé ou devient fonctionnel par l'action d'un déclencheur 16, et délivre en sortie par l'intermédiaire d'une matrice ou d'une cartographie, un paramètre V correspondant à la volonté V du conducteur. Le déclencheur 16 active la matrice dès qu'il détecte un nouveau signal de bouton B_c.

Le troisième étage 10c reçoit en entrée le paramètre V, le signal codifié de la vitesse du véhicule VI_c, le signal issu du déclencheur 16, et délivre en sortie le mode de motricité *V-adaptée* adapté aux conditions de fonctionnement du véhicule, et si celles-ci le permettent, à la volonté V du conducteur. Il fonctionne de façon continue, et indépendamment de l'activation ou non du deuxième étage 10b. Même s'il reçoit en entrée le signal issu du déclencheur 16 qui lui indique une demande de changement de mode de motricité de la part du conducteur, son fonctionnement est continu et n'est pas fonction du signal du déclencheur 16.

Si les conditions de fonctionnement du véhicule changent et que le conducteur n'appuie pas sur le sélecteur 2 pour changer de mode de motricité, alors le deuxième étage 10b n'est pas activé. Comme le troisième étage 10c fonctionne en continu, il détecte la variation des valeurs caractéristiques relatives au fonctionnement du véhicule telles que la vitesse de véhicule VI ou la température du coupleur Te, et examine si ces valeurs dépassent une valeur seuil donnée. Il considère ensuite la volonté V du conducteur qui, dans ce cas, n'est pas modifiée, et correspond à la volonté du conducteur stockée en mémoire dans le troisième étage 10c.

Si cette volonté V du conducteur n'est pas compatible avec les nouvelles conditions de fonctionnement, alors le troisième étage 10c modifie de lui-même le mode de motricité *V_adaptée* et l'envoie au moyen d'affichage 11 et au moyen de transmission 10b. Par exemple, ces conditions de fonctionnement peuvent correspondre à la situation dans laquelle le mode de motricité activé est le mode 4x4 Tout-Terrain, dans laquelle la vitesse du véhicule varie d'une faible vitesse à une forte vitesse suite à une accélération, et dans laquelle le véhicule a changé de terrain.

Si le conducteur appuie sur le sélectionneur 2 pour exprimer une nouvelle demande de mode de motricité du véhicule, alors le deuxième étage 10b est activé par le déclencheur 16.

Comme le troisième étage 10c fonctionne en continu, il détecte la nouvelle volonté conducteur V. Il examine ensuite les valeurs des variables relatives au fonctionnement telles que la vitesse de véhicule VI ou la température du coupleur Te, par exemple si les valeurs de la vitesse de véhicule VI ou de la température du coupleur Te dépassent une valeur seuil donnée. Puis, il analyse l'adéquation entre ces valeurs et la volonté conducteur V.

Dans le cas d'une adéquation entre la valeur de ces variables et la volonté conducteur V, alors le nouveau mode de motricité *V_adaptée* est modifié et correspond à cette nouvelle volonté conducteur V. Dans ce cas, le nouveau mode de motricité est transmis au bloc en vue d'être affiché, et est envoyé au deuxième étage 10b qui réinitialise le mode de motricité *V_adaptée.*

Dans le cas contraire d'une inadéquation entre les variables de fonctionnement du véhicule et la volonté conducteur V, alors le nouveau mode de motricité *V_adaptée* ne correspond pas à la volonté conducteur et est modifié selon un mode de acceptable pour le fonctionnement du véhicule. Il est ensuite envoyé au moyen d'affichage 11 et au moyen de transmission 10b.

La figure 8 représente schématiquement un diagramme de logique mis en oeuvre au sein du troisième étage. Ce diagramme est basé sur l'utilisation de la volonté V du conducteur et est destiné à l'élaboration, en sortie, du nouveau mode de motricité *V*_*adaptée*.

Comme on le voit, le troisième étage 10c comprend une bascule 17, trois opérateurs logiques 18, 19, 20 et un moyen de sélection 21.

La bascule 17 comprend une sortie binaire et permet de bloquer le fonctionnement d'un premier bloc 8 en émettant un signal de valeur 1, en attendant que les conditions d'un deuxième bloc 9 soient remplies.

Lorsque les conditions du bloc amont 22 sont remplies au niveau d'un premier opérateur logique 18, à savoir des conditions de vitesse élevée et une volonté conducteur V correspondant au mode 4x4 Tout-Terrain , alors la bascule 17 émet un signal de valeur 1, et le moyen de sélection 21 connecte le nouveau mode de motricité V_adaptée à un mode de motricité différent du mode 4x4 Tout-Terrain , par exemple au mode 4x4 Automatique. Il est à noter que la volonté conducteur V est la valeur stockée en mémoire dans le troisième étage 10c, et correspond soit à la nouvelle volonté conducteur issue du sélecteur 2 soit, à l'ancienne volonté conducteur. Ainsi, le dispositif 1 détecte une incohérence au niveau du premier opérateur logique 18, rejette la nouvelle volonté du conducteur de changement de mode de motricité, et prend une décision de sélection d'un mode de motricité par défaut plus adapté au fonctionnement du véhicule par le moyen de sélection 21, ici le mode 4x4 Automatique.

Lorsque les conditions du bloc aval 23 sont remplies au niveau d'un deuxième et d'un troisième opérateurs logiques 19 et 20, qui permettent ici d'accepter un mode de motricité 4x2, qui portent sur des conditions de vitesse faible, alors la bascule 17 émet un signal de valeur 0 et le moyen de sélection 21 affecte la volonté V du conducteur au nouveau mode de motricité *V_adaptée*.

La variable caractéristique utilisée ici est la vitesse du véhicule mais toute variable caractérisant les conditions de fonctionnement et d'environnement du véhicule, par exemple la température du coupleur, peut être utilisée dans le dispositif 1 pour déterminer l'adéquation de cette variable avec un mode de motricité demandé par le conducteur parmi tous les modes de motricité possibles du véhicule.

Le nouveau mode de motricité *V_adaptée* correspond donc à la nouvelle volonté V du conducteur lorsque cette dernière est en adéquation avec les conditions de fonctionnement du véhicule, et à un mode de motricité par défini par défaut acceptable pour le fonctionnement du véhicule si ce n'est pas le cas.

Ainsi le dispositif 1 modifie la demande ou le choix d'un nouveau mode de motricité réalisé par le conducteur s'il estime que celui-ci n'est pas approprié aux conditions de fonctionnement du véhicule.

Il fournit également sur l'interface Homme-Machine les indications relatives au mode de motricité ainsi modifié ou adapté.

## Revendications

1. Dispositif de sélection d'un mode de motricité pour véhicule automobile à au moins quatre roues motrices, comprenant un moyen de sélection (2) d'un mode de motricité (B) du véhicule actionnable par le conducteur et des moyens de détermination (5) d'au moins une variable caractéristique du fonctionnement du véhicule (Te_b, VI_b) et comprenant en outre des moyens de traitement (3, 6) aptes à traiter le mode de motricité (B) sélectionné à partir de la valeur de ladite au moins une variable caractéristique du fonctionnement du véhicule (Te_b, VI_b) pour commander un mode de motricité (B) pour le véhicule, lesdits moyens de traitement (3, 6) comprenant des moyens (9) de filtrage desdites variables (Te_b, VI_b) et du mode de motricité (B_b) et des moyens de détermination (10) d'un mode de motricité à partir desdites variables filtrées (Te_f, VI_f, B_f),
**caractérisé en ce que** les moyens de détermination (10) d'un mode de motricité comprennent des moyens de codage (10a) des variables d'entrée filtrées (Te_f, VI_f, B_f) issues des moyens de filtrage (9),
des moyens (10b) de détermination de la volonté (V) du conducteur en fonction de la valeur codée du mode de motricité (B_c), et
des moyens de délivrance (10c) d'un mode de motricité adapté (V_adaptée) en fonction des variables codées caractéristique du fonctionnement du véhicule (Te_c, VI_c) et de la volonté (V) du conducteur, les moyens de délivrance (10c) d'un mode de motricité adapté fonctionnant en continu et comportant des moyens de comparaison aptes à comparer les variables codées caractéristiques du fonctionnement du véhicule (Te_c, VI_c) avec une valeur de seuil correspondant à une valeur admissible pour chaque mode de motricité sélectionné et des moyens d'analyse de l'adéquation entre les variables codées caractéristiques du fonctionnement du véhicule (Te_c, VI_c) et la volonté (V) du conducteur.

2. Dispositif selon la revendication 1, **caractérisé en ce que** les moyens de codage (10a) comportent des moyens de comparaison (13, 15) desdites variables (Te_f, VI_f) avec au moins une valeur de seuil (Vs, Ts) et des moyens (14a, 14b) pour affecter une valeur prédéterminée (Te_c, VI_c) auxdites variables filtrées (Te_f, VI_f, B_f) en fonction du résultat de ladite comparaison.

3. Dispositif selon la revendication 2, **caractérisé en ce que** les moyens de codage (10a) du mode de motricité sélectionné (B_b) par le conducteur comportent des moyens pour affecter une valeur de codage prédéterminée (B_c) pour chaque mode de motricité susceptible d'être sélectionné.

4. Procédé de sélection d'un mode de motricité pour véhicule automobile à au moins quatre roues motrices, comprenant les étapes suivantes :
- sélectionner, par le conducteur du véhicule, un mode de motricité (B_b);
- acquérir au moins une variable caractéristique du fonctionnement du véhicule (Te_b, VI_b) ;
- adapter le mode de motricité sélectionné (B_b) à partir de la valeur de ladite au moins une variable caractéristique du fonctionnement du véhicule (Te_b, VI_b) ;
- filtrer des variables caractéristiques du fonctionnement du véhicule (Te_b, VI_b) et le mode de motricité (B_b);
- déterminer un mode de motricité à partir desdites variables filtrées (Te_f, VI_f, B_f),
- coder des variables filtrées caractéristiques du fonctionnement du véhicule (Te_f, VI_f), et du mode de motricité (B_b) ;
- déterminer la volonté (V) du conducteur en fonction de la valeur codée du mode de motricité (B_c), et
- délivrer un mode de motricité adapté (V_adaptée) en fonction des variables codées caractéristiques du fonctionnement du véhicule (Te_c, VI_c) et de la volonté (V) du conducteur, étape dans laquelle on compare les variables codées caractéristiques du fonctionnement du véhicule (Te_c, VI_c) avec une valeur de seuil correspondant à une valeur admissible pour chaque mode de motricité sélectionné et on analyse l'adéquation entre les variables codées caractéristiques du fonctionnement du véhicule (Te_c, VI_c) et la volonté (V) du conducteur.

5. Procédé selon la revendication 4, **caractérisé en ce qu'**au cours du codage, on procède à une comparaison des variables filtrées (Te_f, VI_f) avec une valeur de seuil (Ts, Vs) et l'on affecte une valeur de codage (Te_c, VI_c) à chaque variable filtrée (Te_f, VI_f) en fonction du résultat de ladite comparaison.

## Patentansprüche

1. Vorrichtung zum Auswählen eines Fahrmodus für ein Kraftfahrzeug mit mindestens vier Antriebsrädern, die ein Auswahlmittel (2) eines Fahrmodus (B) des Fahrzeugs umfasst, das durch den Fahrer betätigt werden kann, und Mittel zum Bestimmen (5) mindestens einer Variablen, die für den Betrieb des Fahrzeugs (Te_b, VI_b) charakteristisch ist und außerdem Verarbeitungsmittel (3, 6) umfasst, die geeignet sind, um den Fahrmodus (B), der ausgehend von dem Wert der mindestens einen charakteristischen Variablen des Betriebs des Fahrzeugs (Te_b, VI_b) ausgewählt ist, zu verarbeiten, um einen Fahrmodus (B) für das Fahrzeug zu steuern, wobei die Verarbeitungsmittel (3, 6) Mittel (9) zum Filtern der Variablen (Te_b, VI_b) und des Fahrmodus (B_b) sowie Mittel zum Bestimmen (10) eines Fahrmodus ausgehend von den gefilterten Variablen (Te_f, VI_f, B_f) umfassen,
**dadurch gekennzeichnet, dass** die Mittel zum Bestimmen (10) eines Fahrmodus Codierungsmittel (10a) der gefilterten Eingangsvariablen (Te_f, VI_f, B_f), die aus den Filtermitteln (9) hervorgehen, umfassen,
Mittel (10b) zum Bestimmen des Willens (V) des Fahrers in Abhängigkeit von dem codierten Wert des Fahrmodus (B_c), und
Mittel zum Liefern (10c) eines Fahrmodus (V-adaptee), der in Abhängigkeit von den codierten Variablen, die für den Betrieb des Fahrzeugs (Te_c, VI_c) und den Willen (V) des Fahrers charakteristisch sind, angepasst ist, wobei die Mittel zum Liefern (10c) eines angepassten Fahrmodus ununterbrochen funktionieren und Vergleichsmittel umfassen, die angepasst sind, um die codierten Variablen, die für den Betrieb des Fahrzeugs (Te_c, VI_c) charakteristisch sind, mit einem Schwellenwert zu vergleichen, der einem für jeden ausgewählten Fahrmodus zulässigen Wert entspricht, und Mittel zum Analysieren der Übereinstimmung zwischen den codierten Variablen, die für den Betrieb des Fahrzeugs (Te_c, VI_c) charakteristisch sind, und dem Willen (V) des Fahrers.

2. Vorrichtung nach Anspruch 1, **dadurch gekennzeichnet, dass** die Codierungsmittel (10a) Vergleichsmittel (13, 15) der Variablen (Te_f, VI_f) mit mindestens einem Schwellenwert (Vs, Ts) umfassen und Mittel (14a, 14b), um den gefilterten Variablen (Te_f, VI_f, B_f) in Abhängigkeit von dem Resultat des Vergleichs einen vorbestimmten Wert (Te_c, VI_c) zuzuweisen.

3. Vorrichtung nach Anspruch 2, **dadurch gekennzeichnet, dass** die Codierungsmittel (10a) des vom Fahrer ausgewählten Fahrmodus (B_b) Mittel zum Zuweisen eines vorbestimmten Codierungswerts (B_c) für jeden Fahrmodus, der ausgewählt werden kann, umfassen.

4. Auswahlverfahren eines Fahrmodus für ein Kraftfahrzeug mit mindestens vier Antriebsrädern, das die folgenden Schritte umfasst:
- Auswählen eines Fahrmodus (B_b) durch den Fahrer des Fahrzeugs,
- Erfassen mindestens einer Variablen, die für den Betrieb des Fahrzeugs (Te_b, VI_b) charakteristisch ist,
- Anpassen des ausgewählten Fahrmodus (B_b) ausgehend von dem Wert der mindestens einen Variablen, die für den Betrieb des Fahrzeugs (Te_b, VI_b) charakteristisch ist,
- Filtern von Variablen, die für den Betrieb des Fahrzeugs (Te_b, VI b) und den Fahrmodus (B_b) charakteristisch sind,
- Bestimmen eines Fahrmodus ausgehend von den gefilterten Variablen (Te_f, VI_f, B_f),
- Codieren von gefilterten Variablen, die für den Betrieb des Fahrzeugs (Te_f, VI_f) und den Fahrmodus (B_b) charakteristisch sind,
- Bestimmen des Willens (V) des Fahrers in Abhängigkeit von dem codierten Wert des Fahrmodus (B_c), und
- Liefern eines angepassten Fahrmodus (V_adaptee) in Abhängigkeit von den codierten Variablen, die für den Betrieb des Fahrzeugs (Te_c, VI_c) und den Willen (V) des Fahrers charakteristisch sind, wobei bei diesem Schritt die codierten Variablen, die für den Betrieb des Fahrzeugs (Te_c, VI_c) charakteristisch sind, mit einem Schwellenwert verglichen werden, der einem Wert entspricht, der für jeden ausgewählten Fahrmodus zulässig ist, und die Übereinstimmung zwischen den codierten Variablen, die für den Betrieb des Fahrzeugs (Te_c, VI_c) charakteristisch sind, und dem Willen (V) des Fahrers analysiert wird.

5. Verfahren nach Anspruch 4, **dadurch gekennzeichnet, dass** im Laufe des Codierens ein Vergleich der gefilterten Variablen (Te_f, VI_f) mit einem Schwellenwert (Ts, Vs) ausgeführt wird und jeder gefilterten Variablen (Te_f, VI_f) in Abhängigkeit von dem Resultat des Vergleichs ein Codierungswert (Te_c, VI_c) zugewiesen wird.

## Claims

1. Device for selecting a drive mode for a motor vehicle with at least four drive wheels, comprising a means (2) for selecting a drive mode (B) of the vehicle which can be actuated by the driver and means (5) for determining at least one variable characteristic of the operation of the vehicle (Te_b, VI_b) and also comprising processing means (3, 6) suitable for processing the drive mode (B) selected on the basis of the value of said at least one variable characteristic of the operation of the vehicle (Te_b, VI b) to control a drive mode (B) for the vehicle, said processing means (3, 6) comprising means (9) for filtering said variables (Te_b, VI_b) and the drive mode (B_b) and means (10) for determining a drive mode from said filtered variables (Te_f, VI_f, B_f),
**characterized in that** the means (10) for determining a drive mode comprise means (10a) for coding the filtered input variables (Te_f, VI_f, B_f) obtained from the filtering means (9),
means (10b) for determining the will (V) of the driver as a function of the coded value of the drive mode (B_c), and
means (10c) for delivering a suitable drive mode (V_adaptée) as a function of the coded variables characteristic of the operation of the vehicle (Te_c, VI_c) and of the will (V) of the driver, the means (10c) for delivering a suitable drive mode operating continuously and comprising comparison means suitable for comparing the coded variables characteristic of the operation of the vehicle (Te_c, VI c) with a threshold value corresponding to an acceptable value of each selected drive mode and means for analyzing the suitability between the coded variables characteristic of the operation of the vehicle (Te_c, VI_c) and the will (V) of the driver.

2. Device according to Claim 1, **characterized in that** the coding means (10a) comprise means (13, 15) for comparing said variables (Te_f, VI_f) with at least one threshold value (Vs, Ts) and means (14a, 14b) for assigning a predetermined value (Te_c, VI_c) to said filtered variables (Te_f, VI_f, B_f) according to the result of said comparison.

3. Device according to Claim 2, **characterized in that** the means (10a) for coding the drive mode (B_b) selected by the driver comprise means for assigning a predetermined coding value (B_c) for each drive mode likely to be selected.

4. Method for selecting a drive mode for a motor vehicle with at least four drive wheels, comprising the following steps:
- selecting, by the driver of the vehicle, a drive mode (B_b);
- acquiring at least one variable characteristic of the operation of the vehicle (Te_b, VI_b);
- adapting the selected drive mode (B_b) on the basis of the value of said at least one variable characteristic of the operation of the vehicle (Te_b, VI_b);
- filtering the variables characteristic of the operation of the vehicle (Te_b, VI_b) and the drive mode (B_b);
- determining a drive mode from said filtered variables (Te_f, VI_f, B_f);
- coding the filtered variables characteristic of the operation of the vehicle (Te_f, VI_f), and of the drive mode (B_b);
- determining the will (V) of the driver as a function of the coded value of the drive mode (B_c) ; and
- delivering a suitable drive mode (V_adaptée) as a function of the coded variables characteristic of the operation of the vehicle (Te_c, Vl_c) and of the will (V) of the driver, a step in which the coded variables characteristic of the operation of the vehicle (Te_c, VI_c) are compared with a threshold value corresponding to an acceptable value for each selected drive mode and the suitability between the coded variables characteristic of the operation of the vehicle (Te_c, VI_c) and the will (V) of the driver is analysed.

5. Method according to Claim 4, **characterized in that**, during the coding, a comparison is made of the filtered variables (Te_f, VI_f) with a threshold value (Ts, Vs) and a coding value (Te_c, VI_c) is assigned to each filtered variable (Te_f, VI f) according to the result of said comparison.
